# EUROPÄISCHE PATENTSCHRIFT

(11) **EP 1 650 079 B1**
(45) Veröffentlichungstag und Bekanntmachung des Hinweises auf die Patenterteilung: **08.06.2011**
(21) Anmeldenummer: 05107998.6
(22) Anmeldetag: 01.09.2005
(51) Int. Cl.: B62D 15/02

(54) **Verfahren zur Unterstützung eines Einparkvorgangs eines Fahrzeugs**
Method for assisting a parking procedure of a vehicle
Méthode pour assister le stationnement d'un véhicule

(30) Priorität: 19.10.2004 DE 102004050795
(43) Veröffentlichungstag der Anmeldung: 26.04.2006
(73) Patentinhaber: ROBERT BOSCH GMBH, 70442 Stuttgart (DE)
(72) Erfinder: Egelhaaf, Jan, 71229, Leonberg (DE)

(56) Entgegenhaltungen:
- US-B1- 6 275 754
- US-B1- 6 302 823

## Beschreibung

### Stand der Technik

Die Erfindung betrifft ein Verfahren zur Unterstützung eines Einparkvorgangs eines Fahrzeugs mittels einer Einparkassistenzvorrichtung, wobei die Einparkassistenzvorrichtung zum Erreichen einer Parkendstellung des Fahrzeugs einen Parkablauf vorausbestimmt.

Ein solches Verfahren ist als Funktionalität eines Systems zum semi-autonomen Einparken, auch als semi-autonomer Parkassistent (SPA) bezeichnet, eines Kraftfahrzeugs bekannt. Das System, bei dem ein Fahrer des Kraftfahrzeugs Lenkrad sowie Fahr- und Bremspedal des Fahrzeugs bedienen muss, berechnet auf Grundlage von geometrischen Informationen, die aus einer Parklückenvermessung (PLV) gewonnen werden, und von Fahrzeuggeometriedaten eine optimale Bahnkurve für das Einparken des Kraftfahrzeugs in eine Parklücke. Die Parklückenvermessung nutzt eine Sensoranordnung an dem Kraftfahrzeug, mittels welcher bei einem Vorbeifahren des Kraftfahrzeugs an der Parklücke und/oder während eines Annäherns des Kraftfahrzeugs an die Parklücke die Parklücke erfasst und ausgemessen wird.

Mit Hilfe von akustischen und/oder optischen Signalen wird der Fahrer von dem semi-autonomen Parkassistenten, und zwar der Parklückenvermessung und der Berechnung der Bahnkurve nachfolgend, über Aktionen, die er auszuführen hat, um das Kraftfahrzeug bestmöglich in der Parklücke abzustellen, informiert. Das vorgegebene Ziel ist dabei, das Kraftfahrzeug bezüglich Begrenzungen der Parklücke, beispielsweise einem Bordstein oder einem benachbarten, bereits geparkten Kraftfahrzeug, exakt ausgerichtet abzustellen.

Bei dem vorgenannten Verfahren sind die Randbedingungen und Eingangsdaten zur Vorausbestimmung des Parkablaufs fest vorgegeben und können weder vom Fahrer des Fahrzeugs noch von dem semi-autonomen Parkassistenten beeinflusst werden. Der Fahrer hat demgegenüber lediglich die Möglichkeit, Signale und/oder Anweisungen des Parkassistenten zu ignorieren und stattdessen nach eigenem Empfinden einzuparken.

Der Erfindung liegt ausgehend vom Stand der Technik die Aufgabe zugrunde, ein Verfahren zur Unterstützung eines Einparkvorgangs eines Fahrzeugs anzugeben, bei welchem die Vorausbestimmung des Parkablaufs variabel gestaltet werden kann.

Diese Aufgabe wird erfindungsgemäß dadurch gelöst, dass bei einem Verfahren der eingangs genannten Art zumindest eine Randbedingung des von der Einparkassistenzvorrichtung vorauszubestimmenden Parkablaufs vorwählbar ist.

Aus der US 6, 302, 823 B1 ist ein Verfahren und eine Vorrichtung zum Manövrieren von Kraftfahrzeugen bekannt, welche insbesondere bei einem Einparkvorgang ein einfaches und sicheres Manövrieren des Kraftfahrzeugs insbesondere dann ermöglichen, wenn ein Manövrieren des Fahrzeugs etwa bei einem starken positiven oder negativen Gefälle erfolgen soll. Hierzu wird eine vorgewählte bzw. eine eingestellte Manövriergeschwindigkeit gewählt, so dass der Fahrer nicht von ungewollten Fahrzeugreaktionen überrascht wird.

Aus der US 6, 275, 754 B1 ist ein automatisches Lenksystem für ein Fahrzeug bekannt, bei dem ein gewünschter Einparkmodus gewählt wird, eine Parklücke in der gewünschten Richtung bestimmt wird und ein Einparken durchgeführt wird. Ferner kann auch eine Lenkung der Hinterachse bzw. der Vorderachse bei Bedarf zugeschaltet werden.

Aus der US 2001 00 26 317 ist ein Verfahren zur Unterstützung eines Einparkvorgangs eines Fahrzeugs mittels einer Einparkassistenzvorrichtung, wobei die Einparkassistenzvorrichtung zum Erreichen einer Parkendstellung des Fahrzeugs ein Bahnkurve für das Einparker vorausbestimmt.

### Vorteile der Erfindung

Mit dem erfindungsgemäßen Verfahren ist es auf einfache Weise möglich, individuell Einfluss auf die Einparkassistenzvorrichtung hinsichtlich der Vorausbestimmung des Parkablaufs zu nehmen. Das bedeutet insbesondere, dass die Berechnung einer Bahnkurve für das Einparken, einer Trajektorie, beeinflusst werden kann. Die Vorwählbarkeit zumindest einer Randbedingung bietet eine individuelle Eingriffsmöglichkeit in die Einparkassistenzvorrichtung, und zwar schon vor der Vorausbestimmung, insbesondere Vorausberechnung, des Parkablaufs; die Fälle, in denen ein Fahrer des Fahrzeugs Anweisungen und/oder Signale der Einparkassistenzvorrichtung bewusst ignoriert (und damit einen unsicheren Ausgang eines Einparkvorgangs riskiert), da sie seinen Vorstellungen vom Parkablauf nicht entsprechen, können mit der Erfindung in erheblichem Umfang reduziert, wenn nicht gar völlig vermieden werden. Die Erfindung trägt dem Umstand vorteilhaft Rechnung, dass die Anforderungen eines Fahrers eines Kraftfahrzeugs unter anderem an den Ablauf des Einparkvorgangs sowie die Endposition des Kraftfahrzeugs in einer Parklücke erheblich differieren. Gegenüber dem Stand der Technik kann mit dem erfindungsgemäßen Verfahren auf diese Anforderungen individualisiert reagiert werden.

Man könnte sich vorstellen, dass die Einparkassistenzvorrichtung vollautomatisch arbeitet, also während des Einparkvorgangs den Fahrer von sämtlichen Aufgaben entbindet und sowohl die Fahrgeschwindigkeit regelt als auch Lenkung und Bremse betätigt; alternativ ist es auch denkbar, dass beispielsweise nur die Lenkung von der Einparkassistenzvorrichtung betätigt wird. Gemäß einer vorteilhaften Weiterbildung der Erfindung ist hingegen das erfindungsgemäße Verfahren besonders einfach und gewährleistet eine sehr hohe Betriebssicherheit, wenn die Einparkassistenzvorrichtung einem Bediener des Fahrzeugs Hinweise zur Fahrzeugbedienung in Übereinstimmung mit dem vorausbestimmten Parkablauf gibt. Damit verbleiben Lenkung, Bremse und Geschwindigkeitsregelung unter dem Einfluss des Fahrers; zum zielgerichteten Einparken dienen die Hinweise der Einparkassistenzvorrichtung, die selbst aber nicht aktiv in den Einparkvorgang eingreift.

Bei der vorwählbaren Randbedingung könnte es sich zum Beispiel um einen nicht zu unterschreitenden Minimalabstand des parkenden eigenen Fahrzeugs zu Parklückenbegrenzungen, beispielsweise bereits geparkten Fahrzeugen oder einem Zaun, handeln; hier könnten vorsichtige Fahrer interessiert sein, einen vergleichsweise großen Minimalabstand einzuhalten, wohingegen andere Fahrer ihr besonderes Interesse auf eine möglichst geringe Anzahl von Einparkzügen richten könnten und demgegenüber einen geringeren Minimalabstand in Kauf nehmen würden. Von besonderem Vorteil ist es, wenn gemäß einer Weiterbildung der Erfindung die vorwählbare Randbedingung eine geometrische Größe einer Parklücke ist. Damit kann zum Beispiel dann, wenn an das Fahrzeug ein Anhänger angehängt oder das Fahrzeug mit überhängender Ladung versehen ist, die Einparkassistenzvorrichtung angeleitet werden, eine eine hinreichende Länge und gegebenenfalls Breite aufweisende Parklücke vorauszuwählen und den Parkablauf in diese vorauszubestimmen. Gleiches gilt, wenn es der Fahrer - gegebenenfalls temporär - bevorzugt, mit besonders wenig Fahrzeugbedienvorgängen, insbesondere in nur einem einzigen Zug, einzuparken. Alternativ oder zusätzlich kann die vorwählbare Randbedingung in letztgenanntem Fall vorteilhaft auch die maximale, von dem Fahrer akzeptierte (und somit bestimmte) Anzahl von Einparkzügen sein. Ist die Anzahl der Einparkzüge vorgegeben, so kann - wenn nicht durch andere Randbedingungen ausgeschlossen - die Einparkassistenzvorrichtung zur Vorausbestimmung des Parkablaufs in verschiedener Weise vorgehen: zum Beispiel kann sie eine vergleichsweise große Parklücke vorauswählen und/oder den oben beschriebenen Minimalabstand vermindern und/oder einen während des Einparkvorgangs vorzunehmenden Lenkradeinschlag erhöhen.

Gemäß einer anderen vorteilhaften Weiterbildung der Erfindung ist die vorwählbare Randbedingung eine relative Zeitdauer des Einparkvorgangs. Dabei kann beispielsweise unterschieden werden nach (vergleichsweise) schnellem Einparken, (vergleichsweise) normalem Einparken und sehr akkuratem Einparken, das eine vergleichsweise lange Zeitdauer in Anspruch nimmt. Beispielsweise kann bei einem schnellen Einparken, das vielleicht bei einem morgendlichen Halt vor einer Bäckerei zum Brötchenholen gewählt wird, ein Schrägstand des Fahrzeugs in einer Parklücke akzeptiert werden, wodurch zeitraubende Einparkzüge eingespart werden können. Hingegen kann es zum Beispiel bei einem Abstellen des Fahrzeugs über mehrere Tage, beispielsweise zum Wochenende, beabsichtigt sein, das Fahrzeug exakt mittig in einer Parklücke abzustellen, wodurch eine größere Anzahl von Einparkzügen erforderlich wird.

Es ist grundsätzlich denkbar, dass die vorwählbare Randbedingung beispielsweise wochenzeitabhängig (zum Beispiel Freitagabend: sehr akkurates Einparken entsprechend langer Zeitdauer) automatisch vorgewählt wird. Hingegen kann das erfindungsgemäße Verfahren vorteilhaft auf eine unmittelbare Situation eines Bedieners des Fahrzeugs angepasst werden, wenn gemäß einer Weiterbildung der Erfmdung die vorwählbare Randbedingung von einem Bediener des Fahrzeugs vor einem Beginn des Einparkvorgangs in die Einparkassistenzvorrichtung eingegeben wird. Die Eingabe kann dabei grundsätzlich beliebig erfolgen, zum Beispiel durch eine Spracheingabe oder durch eine manuelle Eingabe, beispielsweise über eine Eingabetastatur der Einparkassistenzvorrichtung. Der genaue Zeitpunkt der Eingabe durch den Bediener kann dabei beispielsweise unmittelbar vor dem Beginn des Einparkvorgangs liegen oder zum Beispiel vor Beginn einer Fahrt mit dem Fahrzeug von dem Bediener vorgenommen werden.

Gemäß einer anderen vorteilhaften Weiterbildung der Erfindung wird der Bediener des Fahrzeugs von einer Identifikationseinrichtung erkannt, und die vorwählbare Randbedingung wird von der Einparkassistenzvorrichtung in Abhängigkeit von einem Parkbedienerprofil des erkannten Bedieners ausgewählt. Auf diese Weise kann - ohne dass es eines aktiven Eingriffs des Bedieners bedarf - ein individuell auf den Bediener abgestimmtes Einparkverfahren, beispielsweise ein sehr akkurates Einparken, vorgewählt werden. Eine Bedieneridentifikation kann zum Beispiel über den jeweils verwendeten Fahrzeugzündschlüssel erfolgen.

Dabei ist es vorstellbar, dass der Bediener - beispielsweise bei der ersten eigenen Inbetriebnahme des Fahrzeugs - ein Parkbedienerprofil aus einer vorgegebenen Liste auswählt oder selbständig ein seinen Vorstellungen entsprechendes eigenes Parkbedienerprofil in die Einparkassistenzvorrichtung eingibt. Besonders komfortabel und sehr präzise auf den individuellen Bediener angepasst ist das erfindungsgemäße Verfahren hingegen, wenn gemäß einer vorteilhaften Weiterbildung der Erfindung von der Einparkassistenzvorrichtung Einparkvorgänge des erkannten Bedieners aufgezeichnet und dem Parkbedienerprofil hinzugefügt werden. Auf diese Weise kann das aktuell verwendete Parkbedienerprofil beispielsweise immer auf einer bestimmten Anzahl der zuletzt von dem Bediener durchgeführten Einparkvorgänge beruhen.

Gemäß einer anderen vorteilhaften Weiterbildung der Erfindung wird von einer Umfelderfassungsvorrichtung benachbarter Verkehr des einzuparkenden Fahrzeugs als Verkehrssituation aufgenommen, und die vorwählbare Randbedingung wird von der Einparkassistenzvorrichtung in Abhängigkeit von der aufgenommenen Verkehrssituation ausgewählt. So kann beispielsweise bei starkem und/oder schnellem Verkehr ein Einparkverfahren zum schnellen Einparken mit kurzer Zeitdauer und bei wenig Verkehr mit zudem nur geringer Geschwindigkeit ein ein akkurates Einparken gewährleistendes Einparkverfahren zur Durchführung kommen.

Steht eine Navigationseinrichtung zur Verfügung, so ist es von besonderem Vorteil, wenn gemäß einer anderen Weiterbildung der Erfindung die vorwählbare Randbedingung von der Einparkassistenzvorrichtung in Abhängigkeit einer Fahrweginformation der Navigationseinrichtung ausgewählt wird. Die Fahrweginformation der Navigationseinrichtung kann zum Beispiel die Angabe sein, dass die momentan befahrene Straße, in der ein Parkplatz gesucht wird, in einer verkehrsberuhigten Zone gelegen ist. Zum Beispiel kann damit von langsamem Verkehr ausgegangen und folglich eine längere Zeitdauer für das Einparken mit dem Ziel einer sehr akkuraten Endstellung des Fahrzeugs in der Parklücke vorgesehen werden.

Gemäß einer anderen vorteilhaften Weiterbildung der Erfindung wird die von der Einparkassistenzvorrichtung ausgewählte Randbedingung von dem Bediener des Fahrzeugs bestätigt, bevor die Einparkassistenzvorrichtung den Parkablauf vorausbestimmt. So wird auf besonders einfache Weise sichergestellt, dass kein Einparkvorgang auf eine Art durchgeführt wird, die den Vorstellungen des Bedieners des Fahrzeugs widerspricht.

### Zeichnung

Ausführungsbeispiele der Erfindung sind in der Zeichnung schematisiert dargestellt und werden nachfolgend näher beschrieben. Es zeigen
Figur 1 ein Ablaufdiagramm eines ersten Einparkverfahrens,
Figur 2 ein Diagramm bezüglich eines Teilabschnitts des Verfahrens nach Figur 1 im Detail,
Figur 3 ein Diagramm bezüglich einer Vorwahl einer Randbedingung,
Figur 4 ein Ablaufdiagramm eines zweiten Einparkverfahrens und
Figur 5 ein Ablaufdiagramm eines dritten Einparkverfahrens.

### Beschreibung der Ausführungsbeispiele

In sämtlichen Figuren sind sich entsprechende Elemente mit gleichen Bezugszeichen versehen.

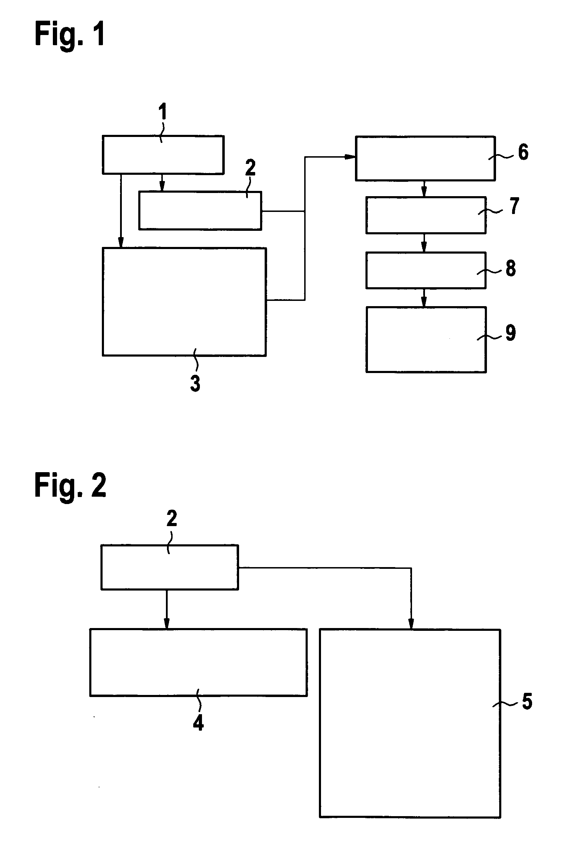

In Figur 1 ist der Ablauf eines Einparkverfahrens anhand eines Ablaufdiagramms gezeigt. In diesem Ausführungsbeispiel hat in einem Eingangsblock 1 ein Bediener eines Kraftfahrzeugs für den Einparkvorgang ein adaptives Einparken gewählt; damit lässt sich der Bediener von einer Einparkassistenzvorrichtung bei Einparkvorgängen weitestgehend leiten. Danach folgt in zwei Parallelblöcken 2, 3 zum einen eine Ermittlung eines Parkbedienerprofils (Parallelblock 2) und zum anderen eine Ermittlung einer momentanen Verkehrssituation (Parallelblock 3).

Die Ermittlung des Parkbedienerprofils in dem ersten Parallelblock 2 wird anhand Figur 2 nachfolgend näher beschrieben: Entweder wird für das Parkbedienerprofil auf einen ersten Unterblock 4 oder einen zweiten Unterblock 5 zugegriffen. Der erste Unterblock 4 enthält ein auf persönlichen, von dem Bediener selbst vorgenommenen Einstellungen beruhendes Parkbedienerprofil. Beispielsweise hat der Bediener hier festgelegt, dass werktags zwischen 8.00 Uhr und 17.00 Uhr ein schnelles Einparken in kurzer Zeitdauer und werktags zwischen 17.00 Uhr und 20.00 Uhr ein normales Einparken mit entsprechend längerer Zeitdauer (und akkuraterer Parkendstellung des Kraftfahrzeugs in einer Parklücke) vorgenommen werden soll.

Demgegenüber enthält der zweite Unterblock 5 ein Parkbedienerprofil, das von der Einparkassistenzvorrichtung automatisch erstellt und fortlaufend angepasst wird. In dem Unterblock 5 ist beispielsweise die Historie der letzten 20 Einparkvorgänge des Bedieners abgelegt; wesentliche Angaben zu den einzelnen Einparkvorgängen können sich zum Beispiel aus folgenden Fragestellungen ergeben: In Parklücken welcher Größe wurde in welcher Zeitdauer bei welcher Verkehrssituation eingeparkt? Wieviele Lenkkorrekturen wurden jeweils vorgenommen? Wieviele abgebrochene Einparkversuche gab es?

Es ist auch denkbar, dass für das Parkbedienerprofil die aus dem ersten Unterblock 4 und dem zweiten Unterblock 5 resultierenden Angaben miteinander verknüpft und gegebenenfalls aus dem jeweils anderen Unterblock ergänzt werden.

Mit dem so in dem ersten Parallelblock 2 gefundenen Parkbedienerprofil und der in dem zweiten Parallelblock 3 aufgenommenen Verkehrssituation erfolgt ein Eingang in einen Block 6, in welchem von der Einparkassistenzvorrichtung anhand des Parkbedienerprofils und der Verkehrssituation eine Parkstrategie festgelegt wird. Die Parkstrategie entspricht einem von der Einparkassistenzvorrichtung vorausbestimmten Parkablauf und ist mit diesem gleichzusetzen.

Die in diesem Block 6 festgelegte Parkstrategie dient als Grundlage für eine Parklückensuche in einem folgenden Schritt des Einparkverfahrens, der durch einen weiteren Block 7 dargestellt ist. Bei der Parklückensuche wird die Einparkassistenzvorrichtung von einer Parklückenvermessung unterstützt.

Ist eine zu Fahrzeug und Parkstrategie passende Parklücke gefunden, so wird in einem weiteren, wiederum durch einen folgenden Block 8 symbolisierten Verfahrensschritt eine Einparktrajektorie auf Basis der durch Parkstrategie, Fahrzeug und Parklückengeometrie vorgegebenen Randbedingungen berechnet. In einem abschließenden, ebenfalls durch einen Block 9 symbolisierten Schritt des Einparkverfahrens erhält der Bediener des Kraftfahrzeugs von der Einparkassistenzvorrichtung Hinweise und/oder Anweisungen zu einem an Fahr- und Verkehrssituation und Parkbedienerprofil angepassten, optimalen Einparken, so dass das Kraftfahrzeug eine gewünschte Endstellung in der Parklücke erreicht.

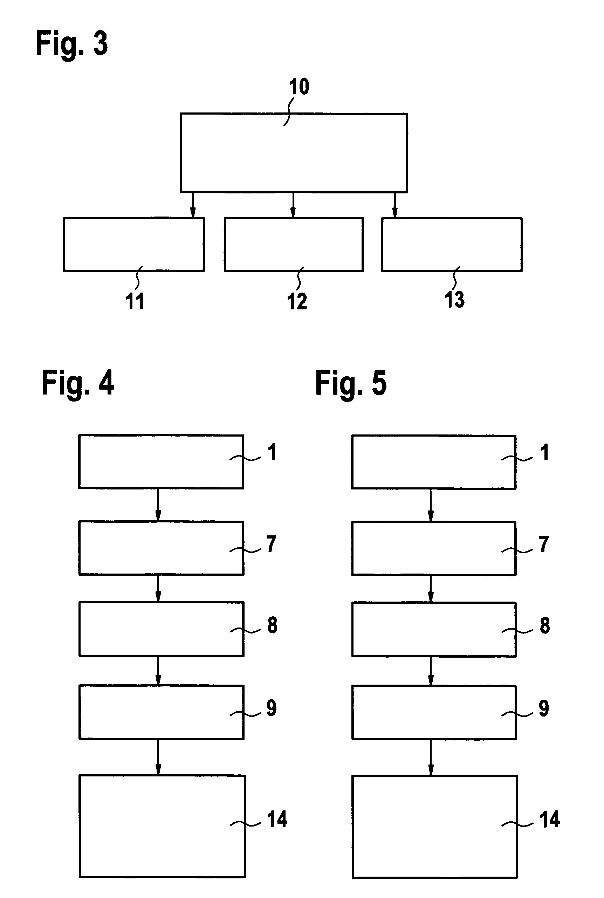

In Figur 3 ist ein Diagramm bezüglich einer Vorwahl einer Randbedingung eines von einer Einparkassistenzvorrichtung vorauszubestimmenden Parkablaufs dargestellt.

In einem Eingangsblock 10 kann von einem Bediener eines Kraftfahrzeugs eine Einparkeinstellung gewählt werden, und zwar in diesem Beispiel entweder für normales Einparken, für schnelles Einparken oder für adaptives Einparken. Anstelle der Auswahlmöglichkeit für adaptives Einparken könnte beispielsweise auch eine Auswahlmöglichkeit für sehr akkurates Einparken vorgesehen sein.

Je nach Wahl wird das Einparkverfahren nach einem von drei dem Eingangsblock 10 nachfolgenden Parallelblöcken 11, 12, 13 fort- und durchgeführt. Dabei steht der linke Parallelblock 11 für normales Einparken, der mittlere Parallelblock 12 für schnelles Einparken und der rechte Parallelblock 13 für adaptives Einparken. Der rechte Parallelblock 13 in Figur 3 entspricht dem Eingangsblock 1 in Figur 1.

Figur 4 zeigt ein Ablaufdiagramm für ein von dem linken Parallelblock 11 in Figur 3 ausgehendes Einparkverfahren für normales Einparken mit Hilfe einer Einparkassistenzvorrichtung. Ein Eingangsblock 1, der dem linken Parallelblock 11 in Figur 3 entspricht, gibt für das Einparkverfahren normales Einparken vor. Es folgt ein Block 7, der für ein Suchen einer geeigneten Parklücke steht. Ist diese gefunden, so findet in einem weiteren Verfahrensschritt von der Einparkassistenzvorrichtung eine Berechnung einer Einparktrajektorie, und zwar für normales Einparken, statt, was ebenfalls durch einen Block 8 symbolisiert wird.

In einem nachfolgenden Verfahrensschritt, angegeben durch einen weiteren Block 9, erfolgt eine Ausgabe von Fahranweisungen durch die Einparkassistenzvorrichtung; ein Bediener parkt ein Kraftfahrzeug mit Hilfe und entsprechend der Fahranweisungen ein, so dass das Kraftfahrzeug in einem letzten Verfahrensschritt, symbolisiert durch einen Endblock 14, ausgerichtet in einer Endstellung in der Parklücke steht. Die Endstellung wird beispielsweise durch eine Ausrichtung des Fahrzeugs parallel zu einem Bordstein sowie gleichbeabstandet zu einem Vorder- und Hinterfahrzeug charakterisiert.

Ein Ablaufdiagramm für ein von dem mittleren Parallelblock 12 in Figur 3 ausgehendes Einparkverfahren für schnelles Einparken eines Kraftfahrzeugs mit Hilfe einer Einparkassistenzvorrichtung ist in Figur 5 dargestellt. Ein Eingangsblock 1, der dem mittleren Parallelblock 12 in Figur 3 entspricht, gibt für das Einparkverfahren schnelles Einparken vor. Es folgt ein Block 7, der für ein Suchen einer für schnelles Einparken geeigneten Parklücke steht. Ist eine solche Parklücke gefunden, so fmdet in einem weiteren Verfahrensschritt von der Einparkassistenzvorrichtung eine Berechnung einer Einparktrajektorie für schnelles Einparken statt, was ebenfalls durch einen Block 8 symbolisiert wird.

In einem nachfolgenden Verfahrensschritt, angegeben durch einen weiteren Block 9, erfolgt eine Ausgabe von Fahranweisungen durch die Einparkassistenzvorrichtung; ein Bediener parkt ein Kraftfahrzeug mit Hilfe und entsprechend der Fahranweisungen ein, so dass das Kraftfahrzeug in einem letzten Verfahrensschritt, symbolisiert durch einen Endblock 14, mehr oder weniger ausgerichtet in einer Endstellung in der Parklücke steht. Die Endstellung für schnelles Einparken kann beispielsweise dadurch charakterisiert sein, dass das Kraftfahrzeug die Parklückenumgrenzungen nicht berührt oder überragt, wobei die über eine solche Grundanforderung hinausgehende Ausrichtung des Kraftfahrzeugs in der Parklücke unerheblich ist.

## Patentansprüche

1. Verfahren zur Unterstützung eines Einparkvorgangs eines Fahrzeugs mittels einer Einparkassistenzvorrichtung, wobei die Einparkassistenzvorrichtung zum Erreichen einer Parkendstellung des Fahrzeugs eine Bahnkurve für das Einparken vorausbestimmt, **dadurch gekennzeichnet, dass** zumindest eine Randbedingung der von der Einparkassistenzvorrichtung vorauszubestimmenden Bahnkurve vorwählbar ist, wobei die vorwählbare Randbedingung von der Einparkassistenzvorrichtung in Abhängigkeit einer Fahrweginformation einer Navigationseinrichtung ausgewählt wird.

2. Verfahren nach Anspruch 1, **dadurch gekennzeichnet, dass** die Einparkassistenzvorrichtung einem Bediener des Fahrzeugs Hinweise zur Fahrzeugbedienung in Übereinstimmung mit der vorausbestimmten Bahnkurve gibt.

3. Verfahren nach Anspruch 1 oder 2, **dadurch gekennzeichnet, dass** die vorwählbare Randbedingung eine geometrische Größe einer Parklücke und/oder eine bestimmte Anzahl von Einparkzügen ist.

4. Verfahren nach einem der vorhergehenden Ansprüche, **dadurch gekennzeichnet, dass** die vorwählbare Randbedingung eine relative Zeitdauer des Einparkvorgangs ist.

5. Verfahren nach einem der vorhergehenden Ansprüche, **dadurch gekennzeichnet, dass** die vorwählbare Randbedingung von einem Bediener des Fahrzeugs vor einem Beginn des Einparkvorgangs in die Einparkassistenzvorrichtung eingegeben wird.

6. Verfahren nach einem der vorhergehenden Ansprüche, **dadurch gekennzeichnet, dass** der Bediener des Fahrzeugs von einer Identifikationseinrichtung erkannt wird und dass die vorwählbare Randbedingung von der Einparkassistenzvorrichtung in Abhängigkeit von einem Parkbedienerprofil des erkannten Bedieners ausgewählt wird.

7. Verfahren nach Anspruch 6, **dadurch gekennzeichnet, dass** von der Einparkassistenzvorrichtung Einparkvorgänge des erkannten Bedieners aufgezeichnet und dem Parkbedienerprofil hinzugefügt werden.

8. Verfahren nach einem der vorhergehenden Ansprüche, **dadurch gekennzeichnet, dass** von einer Umfelderfassungsvorrichtung benachbarter Verkehr des einzuparkenden Fahrzeugs als Verkehrssituation aufgenommen wird und dass die vorwählbare Randbedingung von der Einparkassistenzvorrichtung in Abhängigkeit von der aufgenommenen Verkehrssituation ausgewählt wird.

9. Verfahren nach einem der Ansprüche 6 bis 8, **dadurch gekennzeichnet, dass** die von der Einparkassistenzvorrichtung ausgewählte Randbedingung von dem Bediener des Fahrzeugs bestätigt wird, bevor die Einparkassistenzvorrichtung die Bahnkurve vorausbestimmt.

## Claims

1. Method for assisting a parking procedure of a vehicle by means of a parking assistant device, wherein the parking assistant device determines in advance a trajectory for the parking in order to reach an end parked position of the vehicle, **characterized in that** at least one peripheral condition of the trajectory which is to be determined in advance by the parking assistant device can be pre-selected, wherein the pre-selectable peripheral condition is selected by the parking assistant device as a function of the travel path information of a navigation device.

2. Method according to Claim 1, **characterized in that** the parking assistant device provides an operator of the vehicle with instructions for operating the vehicle in accordance with the trajectory which is determined in advance.

3. Method according to Claim 1 or 2, **characterized in that** the pre-selectable peripheral condition is a geometrical variable of a parking space and/or a specific number of parking manoeuvres.

4. Method according to one of the preceding claims, **characterized in that** the pre-selectable peripheral condition is a relative time period of the parking procedure.

5. Method according to one of the preceding claims, **characterized in that** the pre-selectable peripheral condition is input by an operator of the vehicle into the parking assistant device before the parking procedure starts.

6. Method according to one of the preceding claims, **characterized in that** the operator of the vehicle is recognized by an identification device, and **in that** the pre-selectable peripheral condition is selected by the parking assistant device as a function of a parking operator profile of the recognized operator.

7. Method according to Claim 6, **characterized in that** parking procedures of the recognized operator are recorded and added to the parking operator profile by the parking assistant device.

8. Method according to one of the preceding claims, **characterized in that** adjacent traffic of the vehicle which is to be parked is registered as a traffic situation by a surroundings sensing device, and **in that** the pre-selectable peripheral condition is selected by the parking assistant device as a function of the registered traffic situation.

9. Method according to one of Claims 6 to 8, **characterized in that** the peripheral condition which is selected by the parking assistant device is confirmed by the operator of the vehicle before the parking assistant device determines the trajectory in advance.

## Revendications

1. Procédé d'assistance d'une manoeuvre de stationnement d'un véhicule au moyen d'un dispositif d'assistance au stationnement, selon lequel le dispositif d'assistance au stationnement prédétermine une portion de trajectoire pour le stationnement en vue d'atteindre une position finale de stationnement du véhicule, **caractérisé en ce qu'**au moins une condition additionnelle de la portion de trajectoire à prédéterminer par le dispositif d'assistance au stationnement peut être présélectionnée, la condition additionnelle qui peut être présélectionnée étant sélectionnée par le dispositif d'assistance au stationnement en fonction d'une information de trajet d'un dispositif de navigation.

2. Procédé selon la revendication 1, **caractérisé en ce que** le dispositif d'assistance au stationnement donne à un utilisateur du véhicule des instructions pour la commande du véhicule en conformité avec la portion de trajectoire prédéterminée.

3. Procédé selon la revendication 1 ou 2, **caractérisé en ce que** la condition additionnelle qui peut être présélectionnée est une grandeur géométrique d'un emplacement de stationnement et/ou un nombre donné de parcours de stationnement.

4. Procédé selon l'une des revendications précédentes, **caractérisé en ce que** la condition additionnelle qui peut être présélectionnée est une durée relative de la manoeuvre de stationnement.

5. Procédé selon l'une des revendications précédentes, **caractérisé en ce que** la condition additionnelle qui peut être présélectionnée est saisie par un utilisateur du véhicule dans le dispositif d'assistance au stationnement avant le début de la manoeuvre de stationnement.

6. Procédé selon l'une des revendications précédentes, **caractérisé en ce que** l'utilisateur du véhicule est reconnu par un dispositif d'identification et **en ce que** la condition additionnelle qui peut être présélectionnée est sélectionnée par le dispositif d'assistance au stationnement en fonction d'un profil d'utilisateur de stationnement de l'utilisateur reconnu.

7. Procédé selon la revendication 6, **caractérisé en ce que** les manoeuvres de stationnement de l'utilisateur reconnu sont enregistrées par le dispositif d'assistance au stationnement et ajoutées au profil d'utilisateur de stationnement.

8. Procédé selon l'une des revendications précédentes, **caractérisé en ce que** le trafic voisin du véhicule à stationner est enregistré par un dispositif de détection de l'environnement en tant que situation de trafic et **en ce que** la condition additionnelle qui peut être présélectionnée est sélectionnée par le dispositif d'assistance au stationnement en fonction de la situation de trafic enregistrée.

9. Procédé selon l'une des revendications 6 à 8, **caractérisé en ce que** la condition additionnelle sélectionnée par le dispositif d'assistance au stationnement est confirmée par l'utilisateur du véhicule avant que le dispositif d'assistance au stationnement ne prédétermine la portion de trajectoire.
